# EUROPEAN PATENT APPLICATION

(11) **EP 4 817 930 A1**
(43) Date of publication of application: **07.10.2026**
(21) Application number: 25199910.8
(22) Date of filing: 03.09.2025
(51) Int. Cl.: B60L 3/00, H02J 3/38, H02M 3/158

(54) **POWER SUPPLY SYSTEM AND POWER SUPPLY METHOD FOR ELECTRIC VEHICLE**

(30) Priority: 31.03.2025 KR 20250041181
(71) Applicant: Hyundai Motor Company, Seoul 06797 (KR); Kia Corporation, Seoul 06797 (KR)
(72) Inventor: Hong, Sung Min, Hwaseong-si, Gyeonggi-do (KR)
(74) Representative: Hoffmann Eitle

(57) **Abstract**

A power supply system for an electric vehicle includes a main battery, a first power network connected to the main battery in parallel and including a first converter converting, a first battery and a first load, a plurality of second power networks connected to the main battery in parallel and respectively including a second converter and a second load, a switch module including a plurality of switches, and a controller monitoring a magnitude of a first load current flowing through the first load in real time and sequentially closing the plurality of switches based on an efficiency curve.

## Description

### CROSS-REFERENCE TO RELATED APPLICATION(S)

The present application claims benefit of priority to Korean Patent Application No. 10-2025-0041181 filed on March 31, 2025 in the Korean Intellectual Property Office, the disclosure of which is incorporated herein by reference in its entirety.

### TECHNICAL FIELD

The present disclosure relates to a power supply system and a power supply method for an electric vehicle.

It is to be noted that the contents described in this section simply provide background information on the present disclosure and do not constitute prior art.

Electric vehicles have various types of temporary loads in addition to constant loads. Here, constant loads are loads continuously consuming power regardless of whether vehicles are started, such as various controllers. Temporary loads are loads intermittently consuming power during starting, such as heaters and air-conditioning systems, electric power steering, lights, and warning systems.

To provide power to these constant or temporary loads, a high-voltage DC/DC converter converting power of a high-voltage battery is used or a separate auxiliary battery is added. In particular, as the number of constant loads has recently increased, the efficiency of the high-voltage DC/DC converter may decrease to supply power thereto.

Therefore, in order to prevent the efficiency reduction, it is necessary to change the design specifications of the high-voltage DC/DC converter accordingly, but this may cause problems, such as an increase in the price of the product or an increase in the volume of the product.

### SUMMARY

An aspect of the present disclosure is to provide a power supply system and a power supply method for an electric vehicle, configured for preventing a decrease in the efficiency of a converter and solving the problem of an increase in the price of a product or an increase in the volume of the product due thereto.

According to an aspect of the present disclosure, a power supply system for an electric vehicle may include: a main battery; a first power network connected to the main battery in parallel and including a first converter connected to the main battery and converting DC power from the main battery into first DC power and supplying the first DC power to a first load connected to the first converter, a first battery connected to an output terminal of the first converter, and the first load; a plurality of second power networks connected to the main battery in parallel and respectively including a second converter connected to the main battery and converting the DC power from the main battery into second DC power and supplying the second DC power to a second load connected to an output terminal of the second converter; a switch module including a plurality of switches connected between a first end of the output terminal of the first converter disposed in the first power network and a first end of the output terminal of the second converter disposed in each of the plurality of second power networks; and a controller monitoring a magnitude of a first load current flowing through the first load in real time and sequentially closing the plurality of switches based on an efficiency curve of the first converter and at least one of the second converters as the magnitude of the first load current monitored in real time increases, to additionally supply the second DC power converted by the first converter and at least one of the second converters disposed in the plurality of second power networks to the first load.

The efficiency curve may include an efficiency curve of the first converter or the overall efficiency curve of two or more converters including the first converter and at least one of the second converters.

In a state in which all of the switches are open, the magnitude of the first load current is increased, and efficiency corresponding to the magnitude of the first load current according to the efficiency curve of the first converter is lower than or equal to a preset minimum efficiency, the controller may close any one of the plurality of switches to additionally supply the second DC power converted by the second converter connected to the closed switch to the first load.

In a state in which at least one of the plurality of switches may be closed, based on the magnitude of the first load current being increased, if the efficiency corresponding to the magnitude of the first load current according to the overall efficiency curve of the first converter and the second converter connected to the at least one closed switch is lower than or equal to the preset minimum efficiency, the controller may additionally close any one of the plurality of switches to additionally supply the second DC power converted by the second converter connected to the additionally closed switch to the first load.

In a state in which at least one of the plurality of switches may be closed, based on the magnitude of the first load current being decreased, if the efficiency corresponding to the magnitude of the first load current according to an overall efficiency curve of the first converter and the second converter connected to the at least one closed switch is lower than or equal to the preset minimum efficiency, the controller may open any one of the closed switches to stop supplying the second DC power converted by the second converter connected to the open switch to the first load.

Based on the magnitude of the first load current being decreased, the magnitude of the first load current at a point in time corresponding to the preset minimum efficiency may be smaller than the magnitude of the first load current at a point in time corresponding to the preset minimum efficiency based on the magnitude of the first load current being increased.

Each of the plurality of second power networks may further include a second battery connected to the output terminal of the second converter.

Based on a state of charge (SoC) of the second battery being greater than or equal to a preset error rate compared to an SoC of the first battery, the controller may open a switch connected to a first end of the output terminal of the second converter including the second battery to prevent deterioration of the second battery.

The power supply system may further include: a plurality of first loads; and a plurality of second loads.

The controller, based on detecting malfunctioning of the first converter, may stop the operation of the first converter and operates the first power network with a preset number of minimum loads.

The controller, based on detecting malfunctioning of the second converter disposed in one of the plurality of second power networks, may stop the operation of the second converter disposed in the second power network in which the malfunction is detected, the second load disposed in the second power network in which the malfunction is detected being in an operating state, operate the second power network with a preset number of minimum loads, and supply the first DC power converted by the first converter to the second load disposed in the second power network in which the malfunction may be detected.

The first load may be a constant load continuously consuming power regardless of starting, and the second load may be a temporary load intermittently consuming power during starting.

The main battery may be a high-voltage battery, and the first battery and the second battery may be low-voltage batteries.

The second load connected to the second converter connected to the closed switch may be in an inoperative state.

An inductor may be connected in series to each of the plurality of switches to prevent inrush current.

A second end of the output terminal of the first converter disposed in the first power network and a second end of the output terminal of the second converter disposed in each of the plurality of second power networks may be connected to ground.

According to another aspect of the present disclosure, a power supply method performed by a computing device including one or more processors and a memory storing one or more programs executed by the one or more processors includes: monitoring in real time a magnitude of a first load current flowing to a first load in a first power network including a first converter connected in parallel to a main battery, a first battery connected to an output terminal of the first converter, and the first load; and sequentially closing a plurality of switches based on an efficiency curve of the first converter and at least one of the second converters disposed in a plurality of second power networks as the magnitude of a first load current flowing through the first load monitored in real time increases, to additionally supply second DC power converted by at least one of the first converter and the second converters to the first load.

In a state in which all of the switches are open, based on the magnitude of the first load current being increased, if efficiency corresponding to the magnitude of the first load current according to the efficiency curve of the first converter may be lower than or equal to a preset minimum efficiency, any one of the plurality of switches may be closed to additionally supply the second DC power converted by the second converter connected to the closed switch to the first load.

In a state in which at least one of the plurality of switches is closed, the magnitude of the first load current is increased, and the efficiency corresponding to the magnitude of the first load current according to the overall efficiency curve of the first converter and the second converter connected to the at least one closed switch is lower than or equal to the preset minimum efficiency, any one of the plurality of switches may be additionally closed to additionally supply the second DC power converted by the second converter connected to the additionally closed switch to the first load.

In a state in which at least one of the plurality of switches may be closed, based on the magnitude of the first load current being decrease, if the efficiency corresponding to the magnitude of the first load current according to an overall efficiency curve of the first converter and the second converter connected to the at least one closed switch is lower than or equal to the preset minimum efficiency, any one of the closed switches may be opened to stop supplying the second DC power converted by the second converter connected to the closed switch to the first load.

### BRIEF DESCRIPTION OF DRAWINGS

The above and other aspects, features, and advantages of the present disclosure will be more clearly understood from the following detailed description, taken in conjunction with the accompanying drawings, in which:
FIG. 1 is a diagram illustrating a power supply system for an electric vehicle according to an embodiment of the present disclosure;
FIG. 2 is a diagram illustrating a power supply path according to the closure of two switches in a power supply system for an electric vehicle according to an embodiment of the present disclosure;
FIG. 3A is a diagram illustrating an efficiency curve of a converter and a closing point of a switch according to the efficiency curve according to an embodiment of the present disclosure;
FIG. 3B is a diagram illustrating an opening point of a switch according to an efficiency curve of a converter according to an embodiment of the present disclosure;
FIG. 4 is a diagram illustrating a power supply path when one of two second converters malfunctions in a power supply system for an electric vehicle according to an embodiment of the present disclosure;
FIG. 5 is a flowchart illustrating a power supply method for an electric vehicle according to an embodiment of the present disclosure; and
FIG. 6 is a block diagram of a computing device configured for fully or partially implementing a controller according to an embodiment of the present disclosure.

### DETAILED DESCRIPTION

Hereinafter, embodiments of the present disclosure are described with reference to the accompanying drawings. The following description is disposed to aid in the comprehensive understanding of methods, devices, and/or systems included in the particularities. However, the following description is merely exemplary and not disposed to limit the present disclosure.

In the following description of the present disclosure, a detailed description of known functions and configurations incorporated herein will be omitted when it would render the subject matter of the present disclosure unclear. The terms used in the present specification are defined in consideration of functions used in the present disclosure, and may be changed according to the intent or conventionally used methods of clients, operators, and users. Accordingly, definitions of the terms should be understood on the basis of the entire description of the present specification. Terms used in the following description are merely disposed to describe embodiments of the present disclosure and are not intended to be limiting of the inventive concept. As used herein, the singular forms "a," "an" and "the" are intended to include the plural forms as well, unless the context clearly indicates otherwise. It will be further understood that the terms "comprises" or "has" when used in this specification, specify the presence of stated features, integers, steps, operations, elements, or a portion or combination thereof, but do not preclude the presence or addition of one or more other features, integers, steps, operations, elements, or a portion or combination thereof.

In describing the present disclosure, a constant load is a load continuously consuming power regardless of starting, and examples thereof include various controllers.

In addition, a temporary load is a load intermittently consuming power during starting, and examples thereof include heater and air conditioning systems, electric power steering, lights, and warning systems.

In addition, the present disclosure is mainly applied when an electric vehicle is starting, but it may also be applied when the vehicle is turned off.

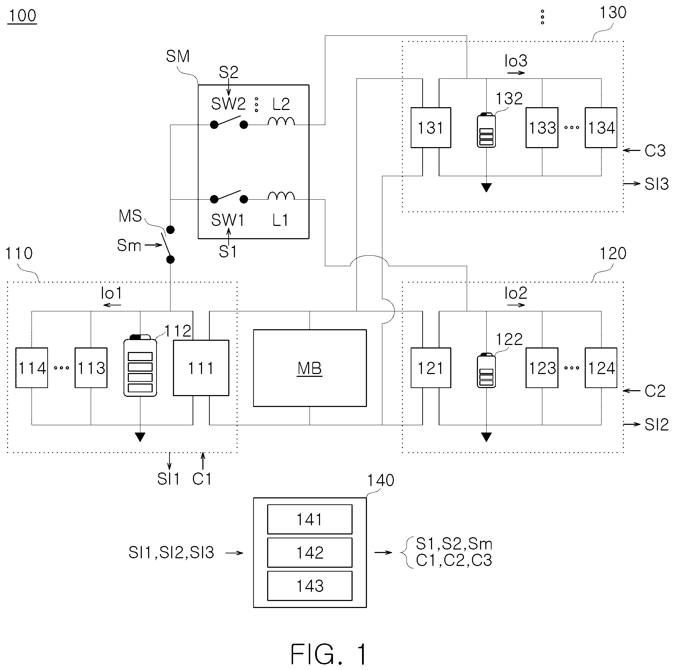

FIG. 1 is a diagram illustrating a power supply system for an electric vehicle according to an embodiment of the present disclosure.

As illustrated in FIG. 1, the power supply system 100 of an electric vehicle may include a main battery MB, a first power network 110, a plurality of second power networks 120 and 130, a switch module SM, and a control unit 140.

The main battery MB may be a high-voltage battery outputting high voltage (e.g., 400 V to 800 V).

The first power network 110 is connected to the main battery in parallel MB and may include a plurality of first loads 113 and 114, a first converter 111 converting DC power from the main battery MB into first DC power and supplying the same to the plurality of first loads 113 and 114, and a first battery 112 connected to an output terminal of the first converter 111. The plurality of first loads 113 and 114 are only illustrated in two, but may be added as needed, and when an additional first load is further disposed, a first load current Io1 may also increase according to the additional first load.

The first converter 111 of the first power network 110 may transmit status information SI1 to the control unit 140 in real time. The status information SI1 may include, for example, a magnitude of the first load current Io1 flowing to the first loads 113 and 114, malfunctioning of the first converter 111, and a state of charge (SOC) of the first battery 112.

In addition, the first converter 111 may receive a control signal C1 from the control unit 140 and operate the first power network 110 with a preset number of minimum loads according to the received control signal C1. For example, if there are ten first loads, only three preset first loads out of the ten first loads may be operated.

The second power network 120 is connected to the main battery in parallel MB and may include a plurality of second loads 123 and 124, a second converter 121 converting DC power from the main battery MB into second DC power and supplying the same to the plurality of second loads 123 and 124, and a second battery 122 connected to an output terminal of the second converter 121.

The second converter 121 of the second power network 120 may transmit status information SI2 to the control unit 140 in real time. This status information SI2 may include, for example, a magnitude of the second load current Io2 flowing to the second loads 123 and 124, malfunction of the second converter 121, and an SOC of the second battery 122.

In addition, the second converter 121 may receive a control signal C2 from the control unit 140 and operate the second power network 120 with a preset number of minimum loads according to the received control signal C2. For example, if there are ten second loads, only three preset second loads out of the ten second loads may be operated.

Similarly, the second power network 130 may be connected to the main battery in parallel MB and may include a plurality of second loads 133 and 134, a second converter 131 converting the DC power from the main battery MB into second DC power and supplying the same to the plurality of second loads 133 and 134, and a second battery 132 connected to an output terminal of the second converter 131.

The second converter 131 of the second power network 130 may transmit status information SI3 to the control unit 140 in real time. The state information SI3 may include, for example, a magnitude of the second load current Io3 flowing to the second loads 133 and 134, malfunction of the second converter 131, and a SOC of the second battery 132.

In addition, the second converter 131 may receive a control signal C3 from the control unit 140 and operate the second power network 130 with a preset number of minimum loads according to the received control signal C3. For example, if there are ten second loads, only three preset second loads out of the ten second loads may be operated.

For convenience, only two second power networks 120 and 130 are illustrated in FIG. 1, but of course, there may be three or more second power networks. In addition, according to an exemplary embodiment of the present disclosure, there may be only one second power network.

In addition, according to an embodiment of the present disclosure, the second batteries 122 and 132 described above may be omitted, in which case the second loads 123 and 124 may be supplied with the second DC power from the second converter 121, and the second loads 133 and 134 may be supplied with the second DC power from the second converter 131.

Meanwhile, the switch module SM may include a plurality of switches SW1 and SW2, and each of the plurality of switches SW1 and SW2 may be connected between one end of the output terminal of the first converter 111 disposed in the first power network 110 and one end of the output terminal of the second converters 121 and 131 respectively disposed in the plurality of second power networks 120 and 130 and may be closed or opened by control signals S1 and S2. For convenience, only two switches SW1 and SW2 are illustrated in FIG. 1, but of course, there may be three or more switches. In addition, inductors L1 and L2 may be respectively connected to the plurality of switches SW1 and SW2 in series to prevent inrush current.

Meanwhile, when at least one switch is closed and at least one of the plurality of second power networks 120 and 130 supplies the second DC power to the first power network 110 through the closed switch, the second load disposed in the second power network connected to the at least one closed switch may be in an inoperative state, and therefore, the second load current flowing to the second load in the inoperative state may be 0.

In addition, the magnitudes of the first DC power and the second DC power described above may be the same and may be, for example, one of 12 V, 24 V, or 48 V, but are not necessarily limited thereto.

Meanwhile, a main switch MS closed or opened by a control signal SM may be further included between the switch module SM and the first power network 110.

In addition, as illustrated in FIG. 1, the other end of the output terminal of the first converter 111 disposed in the first power network 110 and the other end of the output terminal of the second converters 121 and 131 respectively disposed in the plurality of second power networks 120 and 130 may be connected to ground.

Meanwhile, the control unit 140 may close or open the plurality of switches SW1 and SW2 according to the magnitude of the first load current Io1, and to this end, the control unit 140 may include an input unit 141, a controller 142, and a storage unit 143.

The above-described control unit 140 may include a processor (e.g., a computer, a microprocessor, a CPU, an ASIC, a logic circuit, etc.) and a memory storing software instructions providing various functions when executed by the processor. Here, the processor and the memory may be implemented as separate semiconductor circuits. Alternatively, the processor and the memory may be implemented as a single integrated semiconductor circuit. There may be one or more processors.

First, the input unit 141 may receive status information SI1, SI2, and SI3 in real time respectively from the first power network 110 and the plurality of second power networks 120 and 130 and transmit the same to the controller 142.

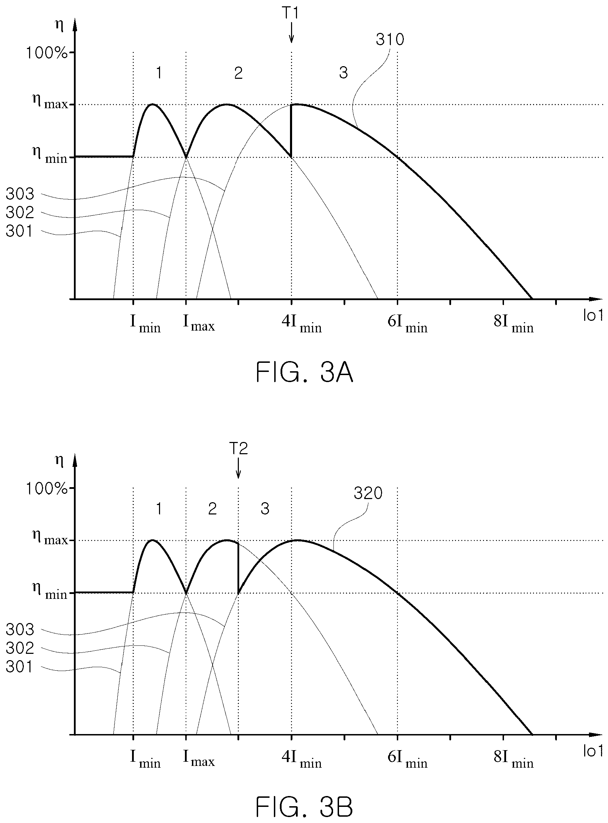

The controller 142 may monitor the magnitude of the first load current Io1 in real time based on the status information SI1. Thereafter, the controller 142 may sequentially close the plurality of switches SW1 and SW2 based on an efficiency curve including at least one of the first converter 111 and the second converters 121 and 131 as the magnitude of the first load current Io1 monitored in real time increases, additionally supplying the second DC power converted by at least one of the first converter 111 and the second converters 121 and 131 to the first load. The efficiency curve is described below with reference to FIGS. 3A and 3B.

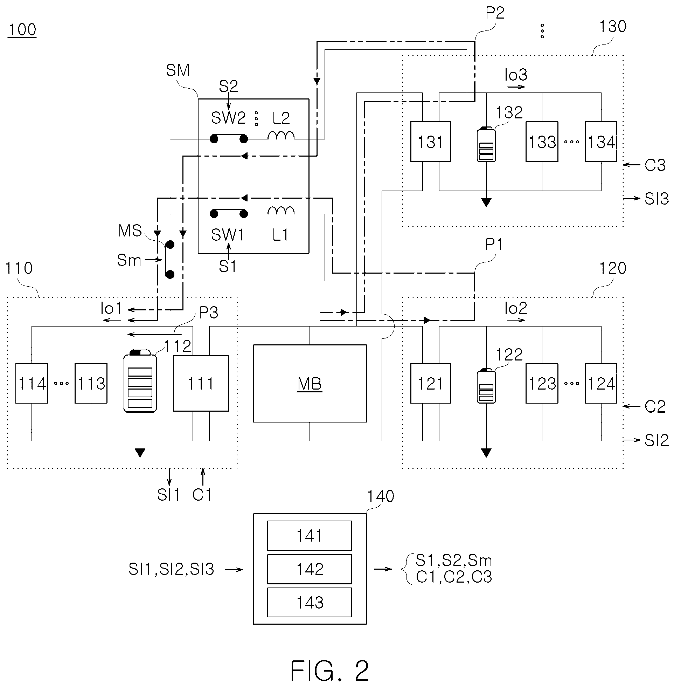

FIG. 2 is a diagram illustrating a power supply path according to the closure of two switches in a power supply system for an electric vehicle according to an embodiment of the present disclosure.

As illustrated in FIG. 2, when the first switch SW1 is closed by the control signal S1, the second converter 121 disposed in the second power network 120 may convert the DC power from the main battery MB into second DC power and then supply the converted second DC power to the first loads 113 and 114 along a first path P1.

Thereafter, when the second switch SW2 is closed by the control signal S2, the second converter 131 disposed in the second power network 130 may convert the DC power from the main battery MB into the second DC power and then supply the converted second DC power to the first loads 113 and 114 along a second path P2.

That is, as the first load current Io1 increases, the two switches SW1 and SW2 may be sequentially closed, and the second converters 121 and 131 may respond to the increase in the first load current Io1 without changing the design of the existing first converter 111 by additionally supplying power to the first loads 114 and 115.

Meanwhile, the controller 142 may control the plurality of switches SW1 and SW2 based on the efficiency curve. Here, the efficiency curve may be the efficiency curve of the first converter 111 or the overall efficiency curve of two or more converters including the first converter 111 and at least one of the second converters 121 and 131. This efficiency curve may be stored in advance.

FIG. 3A is a diagram illustrating the efficiency curve of a converter and a closing time of a switch according to the efficiency curve of the converter according to an embodiment of the present disclosure.

In FIG. 3A, an efficiency curve 301 of the first converter 111 or the overall efficiency curves 302 and 303 of the converters including the first converter 111 and at least one of the two second converters are illustrated. The overall efficiency curve 302 may be an efficiency curve of the first converter 111 and the second converter 121, and the overall efficiency curve 303 may be an efficiency curve of the first converter 111, the second converter 121, and the second converter 131.

As illustrated in FIGS. 1 and 3A, when the magnitude of the first load current Io1 increases in a state in which both switches SW1 and SW2 are open, the controller 142 may determine whether the efficiency corresponding to the magnitude of the first load current Io1 is less than or equal to a preset minimum efficiency ηₘᵢₙ according to the efficiency curve 301 of the first converter 111.

Thereafter, as illustrated in FIGS. 2 and 3A, when it is determined that the efficiency corresponding to the magnitude of the first load current Io1 is lower than or equal to the preset minimum efficiency ηₘᵢₙ, the controller 142 may additionally supply the second DC power converted by the second converter 121 connected to the closed switch SW1 to the first loads 113 and 114 by closing one SW1 of the two switches SW1 and SW2. Thereafter, the magnitude of the first load current Io1 may follow the overall efficiency curve 302 of the first converter 111 and the second converter 121.

In addition, as illustrated in FIGS. 2 and 3A, when the magnitude of the first load current Io1 further increases in a state in which the switch SW1 among the two switches SW1 and SW2 is closed, the controller 142 may determine whether the efficiency corresponding to the magnitude of the first load current Io1 is lower than or equal to the preset minimum efficiency ηₘᵢₙ based on the overall efficiency curve 302 of the second converter 121 and the first converter 111 connected to the closed switch SW1.

When it is determined that the efficiency corresponding to the magnitude of the first load current Io1 is lower than or equal to the preset minimum efficiency ηₘᵢₙ, the controller 142 may additionally close the switch SW2 to additionally supply the second DC power converted by the second converter 131 connected to the additionally closed switch SW2 to the first loads 113 and 114. Thereafter, the magnitude of the first load current Io1 may follow the overall efficiency curve 303 of the first converter 111, the second converter 121, and the second converter 131.

In FIG. 3A, reference numeral T1 indicates a point in time at which the switch SW2 is closed, and reference numeral 310 denotes the overall efficiency of the converters 111, 121, and 131 as the magnitude of the first load current Io1 increases. That is, in section 1, the magnitude of the first load current Io1 follows the efficiency curve 301 of the first converter 111, in section 2, the magnitude of the first load current Io1 follows the overall efficiency curve 302 of the first converter 111 and the second converter 121, and in section 3, the first load current Io1 may follow the overall efficiency curve 303 of the first converter 111, the second converter 121, and the second converter 131.

As described above, according to an embodiment of the present disclosure, as the magnitude of the first load current Io1 increases, the plurality of switches SW1 and SW2 are sequentially closed based on an efficiency curve including at least one of the first converter 111 and the second converters 121 and 131 to additionally supply the second DC power converted by at least one of the first converter 111 and the second converters 121 and 131 to the first loads 113 and 114, preventing a decrease in the efficiency of the converter.

Meanwhile, when the magnitude of the first load current Io1 decreases in a state in which at least one of the plurality of switches is closed, the controller 142 may determine whether the efficiency corresponding to the magnitude of the first load current is lower than or equal to the preset minimum efficiency based on the overall efficiency curve including the second converter and the first converter connected to at least one closed switch.

Thereafter, when the efficiency corresponding to the magnitude of the first load current Io1 is lower than or equal to the preset minimum efficiency ηₘᵢₙ, the controller 142 may open one of the closed switches to stop supplying the second DC power converted by the second converter connected to the open switch to the first loads 113 and 114.

FIG. 3B is a diagram illustrating an opening time of a switch according to the efficiency curve of the converter according to an embodiment of the present disclosure.

As illustrated in FIG. 3B, when the magnitude of the first load current Io1 decreases in a state in which both the two switches SW1 and SW2 are closed, the controller 142 may determine whether the efficiency corresponding to the magnitude of the first load current Io1 is lower than or equal to the preset minimum efficiency ηₘᵢₙ according to the overall efficiency curve 303 including the second converters 121 and 131 and the first converter 111 connected to the two switches SW1 and SW2.

Thereafter, if the efficiency corresponding to the magnitude of the first load current Io1 is lower than or equal to the preset minimum efficiency ηₘᵢₙ, the controller 142 may open one SW2 of the two closed switches SW1 and SW2 to stop supplying the second DC power converted by the second converter 131 connected to the open switch SW2 to the first loads 113 and 114.

In FIG. 3B, reference numeral T2 indicates a point in time at which the switch SW2 is opened, and reference numeral 320 denotes the overall efficiency of the converters 111, 121, and 131 as the magnitude of the first load current Io1 decreases. That is, in section 3, the first load current Io1 follows the overall efficiency curve of the first converter 111 and the two second converters 121 and 131, in section 2, the first load current Io1 follows the overall efficiency curve of the first converter 111 and the second converter 121, and in section 1, the first load current Io1 follows the efficiency curve of the first converter 111.

Meanwhile, according to an embodiment of the present disclosure, when the magnitude of the first load current Io1 decreases, the magnitude of the first load current Io1 at the time point (T2 of FIG. 3B) corresponding to the preset minimum efficiency ηₘᵢₙ is smaller than the magnitude of the first load current Io1 at the time point (T1 of FIG. 3A) corresponding to the preset minimum efficiency ηₘᵢₙ when the magnitude of the first load current Io1 increases, and through such hysteresis control, damage to the switch and reduction in the lifespan due to frequent switching over of the switch may be minimized.

In addition, according to an embodiment of the present disclosure, if the SoC of one 132 of the plurality of second batteries 122 and 132 is higher than or equal to a preset error rate compared to the SoC of the first battery 112, the controller 142 may open the switch SW2 connected to one end of the output terminal of the second converter 131 including the second battery 132, preventing deterioration of the second battery 132. For example, if the SoC of the second battery 132 is excessively low compared to the SoC of the first battery 112, such as when the SoC of the first battery 112 is 90% while the SoC of the second battery 132 is 20%, the switch SW2 may be opened.

In addition, according to an embodiment of the present disclosure, when malfunction of the first converter 111 is detected, the controller 142 may stop the operation of the first converter 111 and operate the first power network 110 with a preset number of minimum loads.

In addition, according to an embodiment of the present disclosure, if malfunction of the second converter disposed in one of the plurality of second power networks 120 and 130 is detected, the controller 142 may stop the operation of the second converter disposed in the second power network in which the malfunction is detected and operate the second power network with a preset number of minimum loads. Thereafter, the controller 142 may supply the first DC power converted by the first converter 111 to the second load disposed in the second power network in which the malfunction is detected.

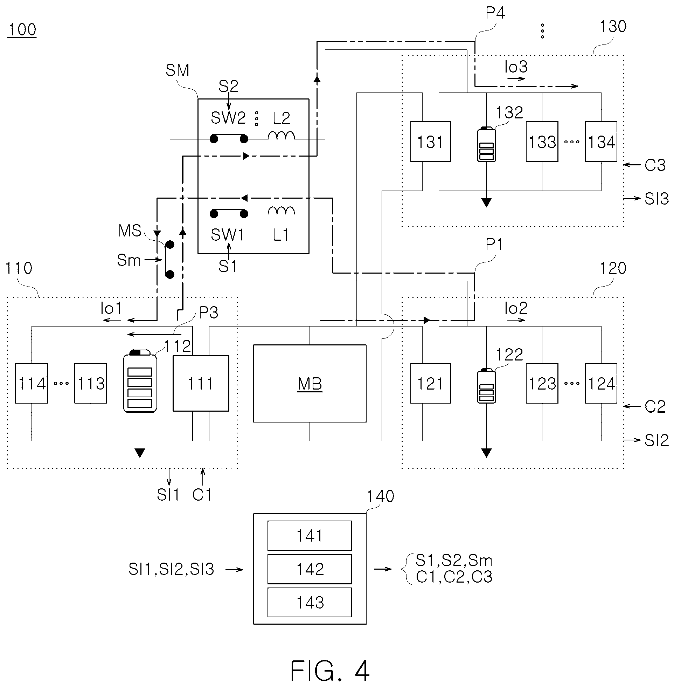

FIG. 4 is a diagram illustrating a power supply path when one of the two second converters malfunctions in the power supply system for an electric vehicle according to an embodiment of the present disclosure. In the case of FIG. 4, the second loads 133 and 134 disposed in the second power network 130 in which the malfunction is detected may be in an operating state.

As illustrated in FIG. 4, if malfunction of the second converter 131 among the two second power networks 120 and 130 is detected, the controller 142 may stop the operation of the second converter 131 in which the malfunction is detected and operate the second power network 130 with a preset number of minimum loads.

Thereafter, the controller 142 may supply the first DC power converted by the first converter 111 to the second loads 133 and 134 disposed in the second power network 130 in which the malfunction is detected.

Here, the second loads 133 and 134 disposed in the second power network 130 in which the malfunction is detected may be in an operating state.

Meanwhile, the storage unit 143 may store programs for implementing various functions of the controller 142 described above, the efficiency curve described above, or the like.

As described above, according to an embodiment of the present disclosure, as the magnitude of the first load current increases, the second DC power converted by at least one of the second converters is additionally supplied to the first load based on the efficiency curve including at least one of the first converter and the second converters, preventing a decrease in the efficiency of the converter and resolving the problem of the product price increasing or the product volume increasing due thereto.

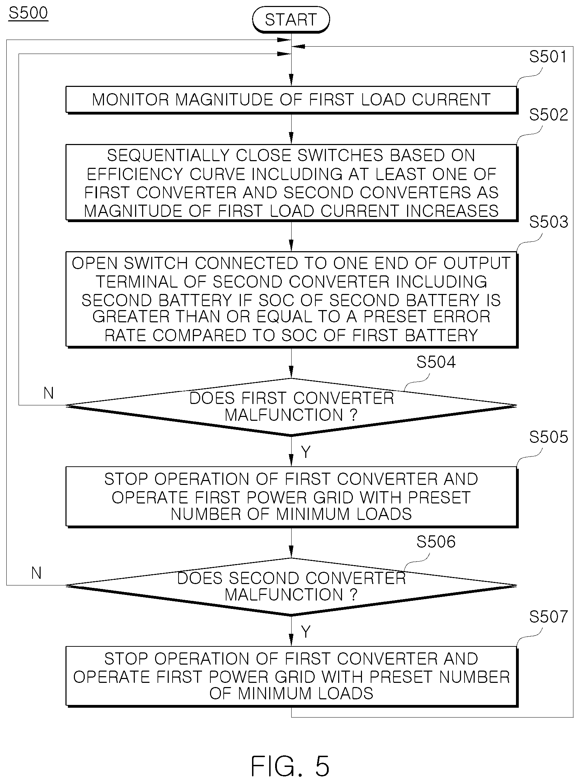

FIG. 5 is a flowchart illustrating a power supply method for an electric vehicle according to an embodiment of the present disclosure.

Hereinafter, a power supply method (S500) for an electric vehicle according to an embodiment of the present disclosure is described with reference to FIGS. 1 to 5. However, for the sake of simplification of the present disclosure, the same descriptions given above with reference to FIGS. 1 to 4 are omitted.

As illustrated in FIGS. 1 to 5, the power supply method (S500) for an electric vehicle according to an embodiment of the present disclosure may be initiated by monitoring the magnitude of the first load current Io1 in real time (S501).

Thereafter, the power supply system 100 of the electric vehicle may sequentially close the plurality of switches SW1 and SW2 based on the efficiency curve including at least one of the first converter 111 and the second converters 121 and 131 as the magnitude of the first load current Io1 increases, additionally supplying the second DC power converted by at least one of the first converter 111 and the second converters 121 and 131 to the first load (S502).

Here, as described above, the efficiency curve may include the efficiency curve of the first converter 111 or the overall efficiency curve of two or more converters including the first converter 111 and at least one of the second converters 121 and 131.

When the magnitude of the first load current Io1 increases while all of the plurality of switches SW1 and SW2 are open, the power supply system 100 of the electric vehicle may determine whether the efficiency corresponding to the magnitude of the first load current Io1 is equal to or lower than the preset minimum efficiency ηₘᵢₙ according to the efficiency curve 301 of the first converter 111, and if the efficiency corresponding to the magnitude of the first load current Io1 is equal to or lower than the preset minimum efficiency ηₘᵢₙ, the power supply system 100 may close any one of the plurality of switches SW1 and SW2 to additionally supply the second DC power converted by the second converter connected to the closed switch to the first loads 113 and 114.

In addition, in a state in which at least one of the plurality of switches SW1 and SW2 is closed, the power supply system 100 of the electric vehicle may determine whether the efficiency corresponding to the magnitude of the first load current Io1 is lower than or equal to the preset minimum efficiency ηₘᵢₙ according to the overall efficiency curve of the first converter and the second converter connected to at least one closed switch when the magnitude of the first load current Io1 decreases.

If it is determined that the efficiency corresponding to the magnitude of the first load current Io1 is lower than or equal to the preset minimum efficiency ηₘᵢₙ, the power supply system 100 of the electric vehicle may additionally close any one of the plurality of switches SW1 and SW2 to additionally supply the second DC power converted by the second converter connected to the additionally closed switch to the first loads 113 and 114.

Meanwhile, in a state in which at least one of the plurality of switches SW1 and SW2 is closed, when the magnitude of the first load current Io1 decreases, the power supply system 100 of the electric vehicle may determine whether the efficiency corresponding to the magnitude of the first load current Io1 is less than or equal to the preset minimum efficiency ηₘᵢₙ according to the overall efficiency curve including the second converter and the first converter connected to at least one closed switch.

If it is determined that the efficiency corresponding to the magnitude of the first load current is less than or equal to the preset minimum efficiency ηₘᵢₙ, the power supply system 100 of the electric vehicle may open any one of the closed switches to stop supplying the second DC power converted by the second converter connected to the opened switch to the first loads 113 and 114.

Meanwhile, as described above, the magnitude of the first load current Io1 at the point in time corresponding to the preset minimum efficiency ηₘᵢₙ when the magnitude of the first load current Io1 decreases may be smaller than the magnitude of the first load current Io1 at the point in time corresponding to the preset minimum efficiency ηₘᵢₙ when the magnitude of the first load current Io1 increases.

Referring back to FIG. 5, if the SoC of one 132 of the plurality of second batteries 122 and 132 is greater than or equal to a preset error rate compared to the SoC of the first battery 112, the power supply system 100 of the electric vehicle may open the switch SW2 connected to one end of the output terminal of the second converter 131 including the second battery 132, preventing deterioration of the second battery 132 (S503).

Thereafter, it may be determined whether the first converter 111 malfunctions (S504).

If it is determined that the first converter 111 malfunctions, the power supply system 100 of the electric vehicle may stop the operation of the first converter 111 and operate the first power network 110 with a preset number of minimum loads (S505).

Thereafter, it is may be determined whether the second converter disposed in one of the plurality of second power networks 120 and 130 malfunctions (S506).

If it is determined that the second converter disposed in one of the plurality of second power networks 120 and 130 malfunctions, the power supply system 100 of the electric vehicle may stop the operation of the second converter disposed in the second power network in which the malfunction is detected and operate the second power network with a preset number of minimum loads (S507). Thereafter, as described above, the power supply system 100 of the electric vehicle may supply the first DC power converted by the first converter 111 to the second load disposed in the second power network in which the malfunction is detected.

As described above, according to an embodiment of the present disclosure, by additionally supplying the second DC power converted by at least one of the second converters to the first load based on the efficiency curve of the first converter and at least one of the second converters as the magnitude of the first load current increases, it is possible to prevent the efficiency of the converter from decreasing and to resolve the problem of the product price increasing or the product volume increasing due thereto.

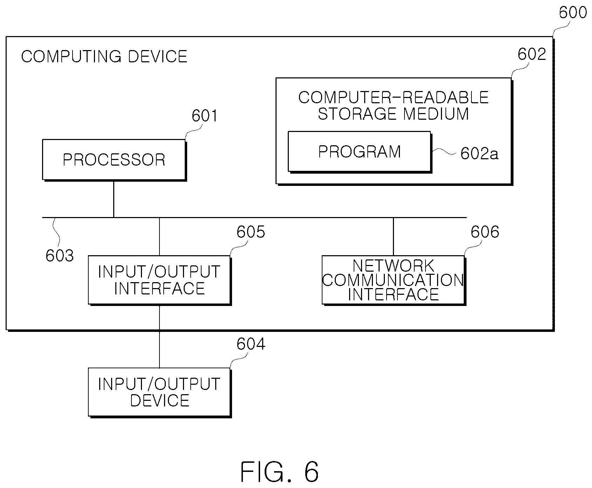

FIG. 6 is a block diagram of a computing device configured for fully or partially implementing the control unit 140 according to an embodiment of the present disclosure.

As illustrated in FIG. 6, a computing device 600 includes at least one processor 601, a computer-readable storage medium 602, and a communication bus 603.

The processor 601 may cause the computing device 600 to operate according to the embodiment described above. For example, the processor 601 may execute one or more programs stored in the computer-readable storage medium 602. The one or more programs may include one or more computer-executable instructions which may be configured to, when executed by the processor 601, cause the computing device 600 to perform operations according to the embodiment.

The computer-readable storage medium 602 is configured to store computer-executable instructions, such as program code, program data, and/or other suitable forms of information. A program 602a stored on the computer-readable storage medium 602 includes a set of instructions executable by the processor 601. In an embodiment, the computer-readable storage medium 602 may be a memory (volatile memory, such as random access memory, nonvolatile memory, or a suitable combination thereof), one or more magnetic disk storage devices, optical disk storage devices, flash memory devices, other forms of storage mediums accessible by the computing device 600 and configured for storing desired information, or a suitable combination thereof.

The communication bus 603 interconnects various other components of the computing device 600, including the processor 601 and the computer-readable storage medium 602.

The computing device 600 may also include one or more input/output interfaces 605 providing interfaces for one or more input/output devices 604 and one or more network communication interfaces 606. The input/output interfaces 605 and the network communication interfaces 606 are connected to the communication bus 603. The network may be any one of a cellular network, such as Global System for Mobile Communications (GSM), Enhanced Data Rates for GSM Evolution (EDGE), General Packet Radio Service (GPRS), Code Division Multiple Access (CDMA), Time Division-CDMA (TD-CDMA), Universal Mobile Telecommunications System (UMTS), Long Term Evolution (LTE), or another cellular network.

The input/output device 604 may be connected to other components of the computing device 600 via the input/output interface 605. Exemplary input/output devices 604 may include input devices, such as a pointing device (such as a mouse or trackpad), a keyboard, a touch input device (such as a touchpad or a touchscreen), a voice or sound input device, various types of sensor devices and/or imaging devices, and/or output devices, such as a display device, a printer, a speaker, and/or a network card. The exemplary input/output device 604 may be included, as a component constituting the computing device 600, within the computing device 600 or may be connected, as a separate device distinct from the computing device 600, to the computing device 600.

According to an embodiment of the present disclosure, as the magnitude of the first load current increases, the second DC power converted by at least one of the second converters is additionally supplied to the first load based on an efficiency curve including at least one of the first converter and the second converter, preventing a decrease in the efficiency of the converter and resolving the problem of the product price increasing or the product volume increasing due thereto.

Meanwhile, the embodiments of the present disclosure may include a program for performing the methods described in this specification on a computer and a computer-readable recording medium including the program. The computer-readable recording medium may include program instructions, local data files, local data structures, etc., alone or in combination. The medium may be those specifically designed and configured for the present disclosure or may be those commonly available in the computer software field. Examples of computer-readable recording medium include magnetic medium, such as hard disks, floppy disks, and magnetic tapes, optical recording medium, such as CD-ROMs, DVDs, and hardware devices specifically configured to store and perform program instructions, such as ROM, RAM, flash memory, etc. Examples of the program may include not only machine language code, such as that generated by a compiler, but also high-level language code that may be executed by a computer using an interpreter or the like.

While the present disclosure has been particularly illustrated and described with reference to embodiments thereof, a person skilled in the art will understand that the invention is not limited to the disclosed exemplary embodiments but may be variously modified within the scope of the present disclosure. Therefore, the scope of the present disclosure should not be limited to the above-described embodiments but should be determined by all changes or modifications derived from the scope of the appended claims and equivalents of the following claims.

## Claims

1. A power supply system for an electric vehicle, the power supply system comprising:
a main battery;
a first power network connected to the main battery in parallel and including:
a first converter connected to the main battery and converting DC power from the main battery into first DC power and supplying the first DC power to a first load connected to the first converter;
a first battery connected to an output terminal of the first converter; and
the first load;
a plurality of second power networks connected to the main battery in parallel and respectively including:
a second converter connected to the main battery and converting the DC power from the main battery into second DC power and supplying the second DC power to a second load connected to an output terminal of the second converter; and
the second load;
a switch module including a plurality of switches connected between a first end of the output terminal of the first converter disposed in the first power network and a first end of the output terminal of the second converter disposed in each of the plurality of second power networks; and
a controller monitoring a magnitude of a first load current flowing through the first load in real time and sequentially closing the plurality of switches based on an efficiency curve of the first converter and at least one of the second converters as the magnitude of the first load current monitored in real time increases, to additionally supply the second DC power converted by the first converter and at least one of the second converters disposed in the plurality of second power networks to the first load.

2. The power supply system of claim 1, wherein the efficiency curve includes the efficiency curve of the first converter or an overall efficiency curve of two or more converters including the first converter and at least one of the second converters.

3. The power supply system of claim 1 or 2, wherein, in a state in which all of the switches are open, the magnitude of the first load current increases, and efficiency corresponding to the magnitude of the first load current according to the efficiency curve of the first converter is lower than or equal to a preset minimum efficiency, the controller closes any one of the plurality of switches to additionally supply the second DC power converted by the second converter connected to the closed switch to the first load.

4. The power supply system of claim 3, wherein, in a state in which at least one of the plurality of switches is closed, the magnitude of the first load current is increased, and the efficiency corresponding to the magnitude of the first load current according to an overall efficiency curve of the first converter and the second converter connected to the at least one closed switch is lower than or equal to the preset minimum efficiency, the controller additionally closes any one of the plurality of switches to additionally supply the second DC power converted by the second converter connected to the additionally closed switch to the first load.

5. The power supply system of claim 4, wherein, in a state in which at least one of the plurality of switches is closed, the magnitude of the first load current is decreased, and the efficiency corresponding to the magnitude of the first load current according to the overall efficiency curve of the first converter and the second converter connected to the at least one closed switch is lower than or equal to the preset minimum efficiency, the controller opens any one of the closed switches to stop supplying the second DC power converted by the second converter connected to the open switch to the first load.

6. The power supply system of claim 5, wherein, based on the magnitude of the first load current being decreased, the magnitude of the first load current at a point in time corresponding to the preset minimum efficiency is smaller than the magnitude of the first load current at a point in time corresponding to the preset minimum efficiency based on the magnitude of the first load current being increased.

7. The power supply system of one of claims 1 to 6, wherein each of the plurality of second power networks further includes a second battery connected to the output terminal of the second converter.

8. The power supply system of claim 7, wherein, based on a state of charge (SoC) of the second battery being greater than or equal to a preset error rate compared to an SoC of the first battery, the controller opens a switch connected to the first end of the output terminal of the second converter including the second battery to prevent deterioration of the second battery.

9. The power supply system of one of claims 1 to 8, wherein the first load is in plural and the second load is in plural.

10. The power supply system of claim 9, wherein the controller, based on detecting malfunctioning of the first converter, stops operation of the first converter and operates the first power network with a preset number of minimum loads.

11. The power supply system of claims 9 or 10, wherein
the controller, based on detecting malfunctioning of the second converter disposed in one of the plurality of second power networks, stops operation of the second converter disposed in the second power network in which the malfunction is detected, the second load disposed in the second power network in which the malfunction is detected being in an operating state,
operates the second power network with a preset number of minimum loads, and supplies the first DC power converted by the first converter to the second load disposed in the second power network in which the malfunction is detected.

12. The power supply system of one of claims 1 to 11, wherein the first load is a constant load continuously consuming power regardless of starting, and the second load is a temporary load intermittently consuming power during starting.

13. The power supply system of claim 7, wherein the main battery is a high-voltage battery, and the first battery and the second battery are a low-voltage battery.

14. The power supply system of claim 12, wherein the second load connected to the second converter connected to the closed switch is in an inoperative state.

15. The power supply system of one of claims 1 to 14, wherein an inductor is connected in series to each of the plurality of switches to prevent inrush current.
